# EUROPEAN PATENT APPLICATION

(11) **EP 2 784 671 A1**
(43) Date of publication of application: **01.10.2014**
(21) Application number: 12851881.8
(22) Date of filing: 27.03.2012
(51) Int. Cl.: G06F 9/455

(54) **VIRTUAL MACHINE MANAGEMENT SYSTEM AND METHOD**

(30) Priority: 24.11.2011 CN 201110378751
(71) Applicant: Hon Hai Precision Industry Co., Ltd., New Taipei City (TW)
(72) Inventor: LEE, Chung-I, 236 New Taipei Taiwan (TW); YEH, Chien-Fa, 236 New Taipei Taiwan (TW); LU, Chiu-Hua, 236 New Taipei Taiwan (TW); PENG, Kuan-Chiao, 236 New Taipei Taiwan (TW); SUN, Ho-I, 236 New Taipei Taiwan (TW); YEN, Tsung-Hsin, 236 New Taipei Taiwan (TW)
(74) Representative: Gray, John James
(86) International application number: PCT/CN2012/073122
(87) International publication number: WO 2013/075440

(57) **Abstract**

A method for managing virtual machines (VMs) installed in physical machines using a control computer, the method receives a control command for adjusting an initial size of a first VM (S1), searches for a physical machine that has enough computing resources for creating a second VM of a specified size (S2), creates the second VM of the specified size in a found physical machine (S3). The method further copies computing resources of the first VM to the second VM at a first time (S4), controls the first VM and the second VM running in a parallel mode until all of the computing resources of the first VM have been copied to the second VM (S5), stops parallel running of the first VM and the second VM at a second time (S6), deletes the first VM and releases the computing resource of the first VM (S7).

## Description

### FIELD

Embodiments of the present disclosure relate to cloud computing technology, and particularly to a control computer and method for managing virtual machines installed in physical machines.

### BACKGROUND

In cloud computing technology, a data center includes a plurality of physical machines (e.g., servers), where each physical machine is installed with a plurality of virtual machines (VMs) that provide multiple services to users. Each virtual machine occupies some computing resources (e.g., CPU and hard disks) of the physical machine. The computing resources occupied by the virtual machine need to be adjusted (increased or decreased) when the computing resources of the virtual machine are too many (need to decrease) or insufficient (need to increase).

However, the virtual machine is suspended during the adjustment process, and cannot provide services to the users. Therefore, an efficient method for managing virtual machines installed in physical machines is desired.

### SUMMARY

According to one aspect of the disclosure, a virtual machine management method is provided. The virtual machine management method includes receiving a control command for adjusting an initial size of a first virtual machine installed in one of the physical machines. Searching for a physical machine that has enough computing resources for creating a second virtual machine of a specified size, creating the second virtual machine of the specified size in a found physical machine, copying computing resources of the first virtual machine to the second virtual machine at a first time. Controlling the first virtual machine and the second virtual machine running in a parallel mode until all of the computing resources of the first virtual machine have been copied to the second virtual machine. Stopping parallel running of the first virtual machine and the second virtual machine at a second time, and deleting the first virtual machine, and releasing the computing resource of the first virtual machine.

### BRIEF DESCRIPTION OF THE DRAWINGS

Embodiments of the invention are described, by way of example only, with reference to the accompanying drawings, in which:
FIG. 1 is a schematic diagram of one embodiment of a control computer electronically connected with a data center.
FIG. 2 is a schematic diagram of one embodiment of the control computer including a virtual machine management system.
FIG. 3 is a schematic diagram of function modules of the virtual machine management system included in the control computer.
FIG. 4 is a flowchart of one embodiment of a method for managing virtual machines installed in physical machines using the control computer.
FIGs. 5A-5E are schematic diagrams of an example of increasing a size of a virtual machine installed in a physical machine.

### DETAILED DESCRIPTION

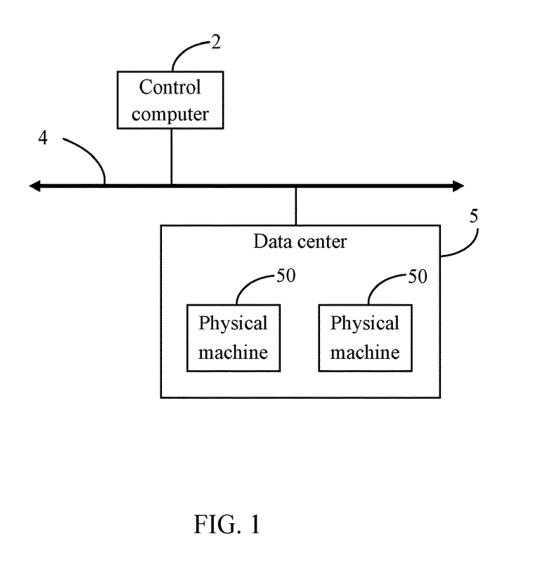

FIG. 1 is a schematic diagram of one embodiment of a control computer 2 electronically connected with a data center 5 through a network 4. The data center 5 includes a plurality of physical machines (e.g. servers) 50. For example, the network 4 may be the Internet, an intranet, or any other relevant network.

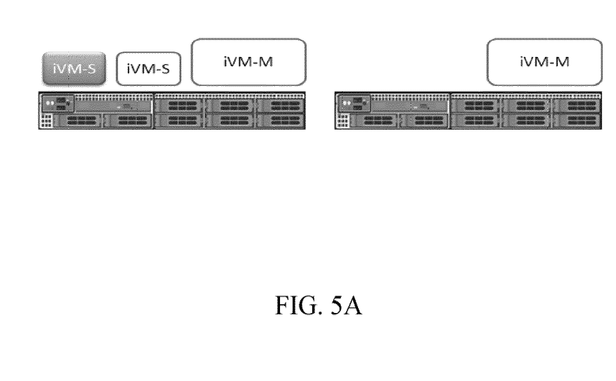

In one embodiment, each physical machine 50 is installed with a plurality of virtual machines (VMs) that provide services to users. For example, as shown in FIG. 5A, the virtual machines "iVM-S," and "iVM-M" are installed in the left physical machine "Host01," the virtual machine "iVM-M" is installed in the right physical machine "Host02". In one embodiment, the virtual machine include a small type (iVM-S), a medium type (iVM-M), and a big type (iVM-XL). The type of the virtual machine is determined according to computing resources (e.g., CPU or hard disk) occupied by the virtual machine. For example, the big type of the virtual machine occupies more computing resources than the medium type and the small type.

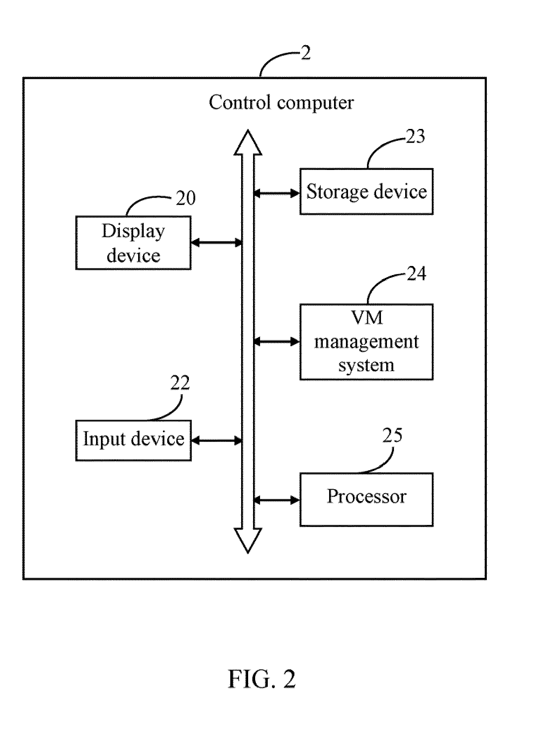

FIG. 2 is a schematic diagram of one embodiment of the control computer 2 including a VM management system 24. The control computer 2 further includes a display device 20, an input device 22, a storage device 23, and at least one processor 25. The control computer 2 may be a server or any other computing device. FIG. 2 illustrates only one example of the control computer 2 that may include more or fewer components than as illustrated, or a different configuration of the various components may exist in other embodiments.

The display device 20 may be a liquid crystal display (LCD) or a cathode ray tube (CRT) display, and the input device 22 may be a mouse, a keyboard, a touch screen, and/or a touchpad used for inputting data.

The VM management system 24 is used to increase or decrease a size of a designated virtual machine which is running without suspending the virtual machine when computing resources (e.g., CPU or hard disk) of the virtual machine are too many (need to decrease) or insufficient (need to increase). For example, the computing resources may include central processing units (CPUs), memory, and hard disks occupied by the virtual machine. In one embodiment, the VM management system 24 may include computerized instructions in the form of one or more programs that are executed by the at least one processor 25 and stored in the storage device 23 (or memory). A detailed description of the VM management system 24 will be given in the following paragraphs.

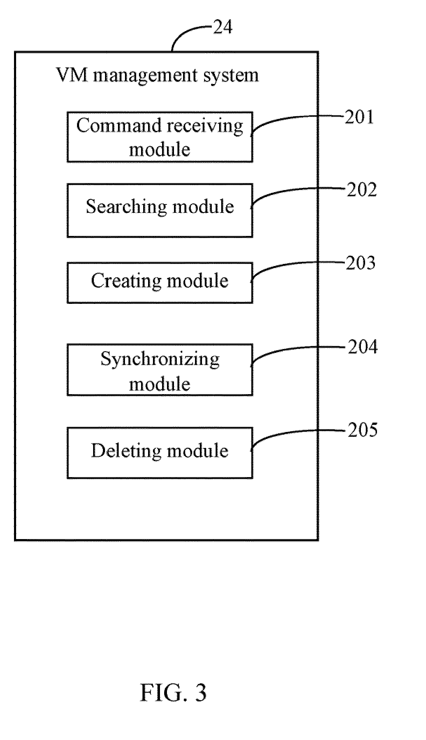

FIG. 3 is a schematic diagram of function modules of the VM management system 24 included in the control computer 2. In one embodiment, the VM management system 24 may include one or more modules, for example, a command receiving module 201, a searching module 202, a creating module 203, a synchronizing module 204, and a deleting module 205. In general, the word "module", as used herein, refers to logic embodied in hardware or firmware, or to a collection of software instructions, written in a programming language, such as, Java, C, or assembly. One or more software instructions in the modules may be embedded in firmware, such as in an EPROM. The modules described herein may be implemented as either software and/or hardware modules and may be stored in any type of non-transitory computer-readable medium or other storage device. Some non-limiting examples of non-transitory computer-readable medium include CDs, DVDs, BLU-RAY, flash memory, and hard disk drives.

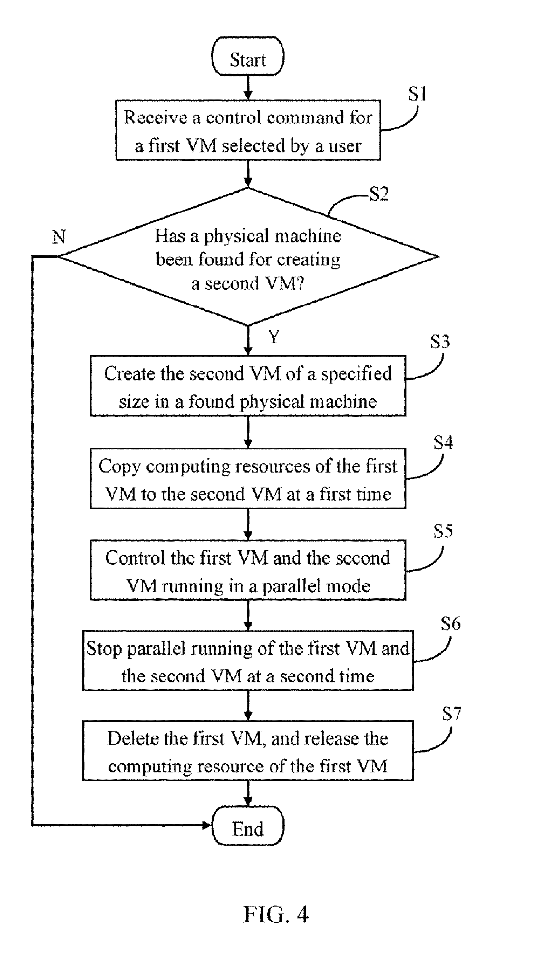

FIG. 4 is a flowchart of one embodiment of a method for managing virtual machines installed in the physical machines 50 using the control computer 2. Depending on the embodiment, additional steps may be added, others removed, and the ordering of the steps may be changed.

In step S1, the command receiving module 201 receives a control command for adjusting an initial size of a first virtual machine installed in one of the physical machines 50, and receives a specified size of a second virtual machine used to replace the initial size of the first virtual machine. In one embodiment, the control command includes a first type for increasing the initial size of the first virtual machine and a second type for decreasing the initial size of the first virtual machine. For example, the initial size of the first virtual machine may include a first number of the CPU, a first size of the memory, and a first size of the hard disk allocated to the first virtual machine. The specified size of the second virtual machine may include a second number of the CPU, a second size of the memory, and a second size of the hard disk specified by a user.

The specified size of the second virtual machine is greater than the initial size of the first virtual machine if the control command is the first type, and the specified size of the second virtual machine is less than the initial size of the first virtual machine if the control command is the second type. For example, as shown in FIG. 5A, the first virtual machine may be the virtual machine "iVM-S" (i.e., the left one) in the physical machine "Host01".

For example, if a resource usage rate of the first virtual machine is greater than a first value (e.g., 90%), namely the computing resource is determined to be insufficient, the command receiving module 201 receives the first type of the control command to increase the initial size of the first virtual machine. If the resource usage rate of the first virtual machine is less than a second value (e.g., 20%), namely it is determined too many computing resources are attached, the command receiving module 201 receives the second type of the control command to decrease the initial size of the first virtual machine. The resource usages rate are selected from the group including a CPU usage rate, a hard disk usage rate, and a memory usage rate of the physical machine 50 occupied by the first virtual machine.

In step S2, the searching module 202 searches for a physical machine 50 that has enough computing resources for creating the second virtual machine of the specified size, and determines whether the physical machine 50 having enough computing resources has been found. If the physical machine 50 having enough computing resources has been found, the procedure goes to step S3. If the physical machine 50 having enough computing resources has not been found, the searching module 202 outputs a failure message on the display device 20, then the procedure ends.

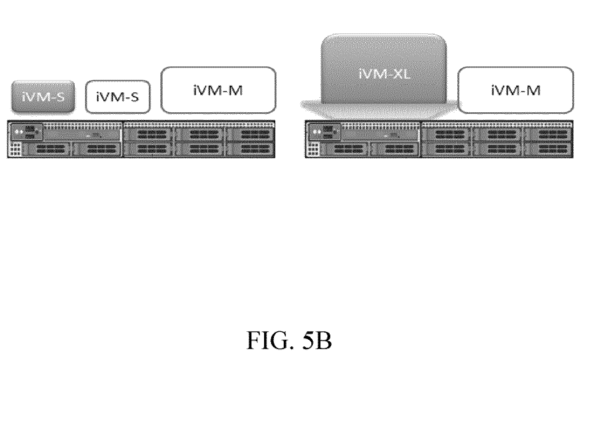

In step S3, the creating module 203 creates the second virtual machine of the specified size in a found physical machine 50 (i.e., the physical machine found in step S2). For example, as shown in FIG. 5A, the initial size of the first virtual machine "iVM-S" is (CPU:1, RAM:2GB, HD:200GB), the specified size of the second virtual machine "iVM-XL" is (CPU:8, RAM:16GB, HD:1600GB). If the physical machine "Host02" has enough computing resources for creating the second virtual machine "iVM-XL," the second virtual machine is created in "Host02" as shown in FIG. 5B

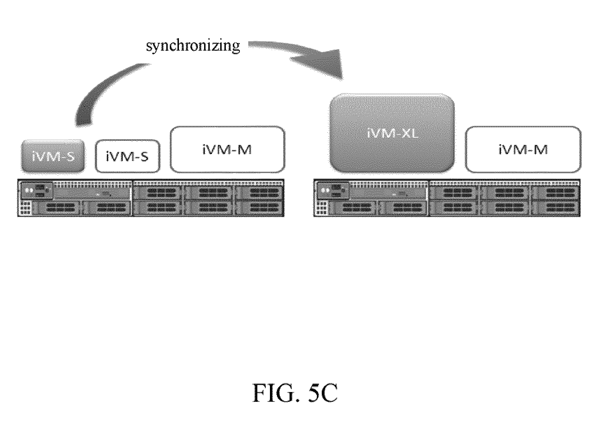

In step S4, the synchronizing module 204 copies the computing resources of the first virtual machine "iVM-S" to the second virtual machine "iVM-XL" at a first time (refers to FIG. 5C). In one embodiment, the synchronizing module 204 first copies the computing resources of idle applications in the first virtual machine to the second virtual machine, and copies the computing resources of working applications in the first virtual machine to the second virtual machine when the working applications have ended. In one embodiment, the first time is determined to be a creation time of the second virtual machine "iVM-XL", or determined to be a total time of the creation time and a first preset delay time (i.e., two seconds).

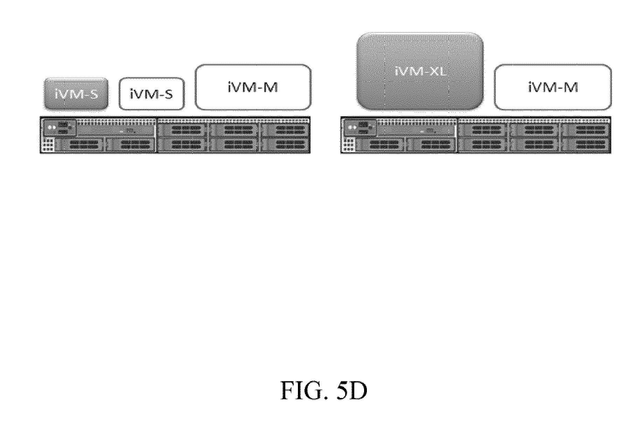

In step S5, the synchronizing module 204 controls the first virtual machine "iVM-S" and the second virtual machine "iVM-XL" running in a parallel mode until all of the computing resources of the first virtual machine "iVM-S" have been copied to the second virtual machine "iVM-XL" (refers to FIG. 5D). In one embodiment, the first virtual machine and the second virtual machine are running synchronously in the parallel mode, namely, the working application is executed in both the first virtual machine "iVM-S" and the second virtual machine "iVM-XL" at the same time such that the services provided by the first virtual machine "iVM-S" are not interrupted when the initial size of the first virtual machine "iVM-S" is adjusted (e.g., increased or decrease).

In step S6, the synchronizing module 204 stops parallel running of the first virtual machine "iVM-S" and the second virtual machine "iVM-XL" at a second time. In one embodiment, the second time is determined to be a finish time when all of the computing resources of the first virtual machine "iVM-S" have been copied to the second virtual machine "iVM-XL", or determined to be a total time of the finish time and a second preset delay time (e.g., four seconds).

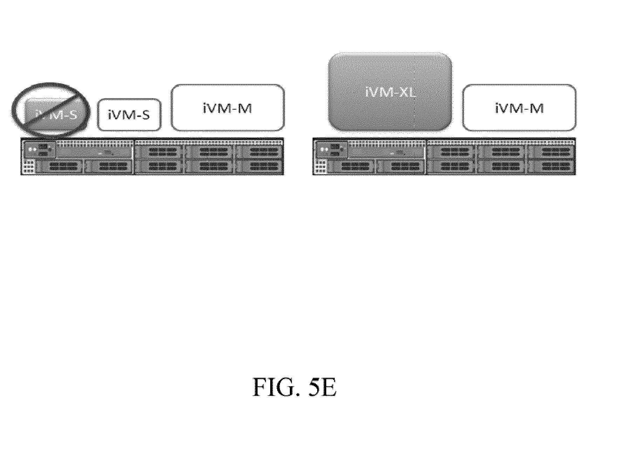

In step S7, the deleting module 205 deletes the first virtual machine "iVM-S", and releases the computing resource of the first virtual machine "iVM-S" (refers to FIG. 5E).

It should be emphasized that the above-described embodiments of the present disclosure, particularly, any embodiments, are merely possible examples of implementations, merely set forth for a clear understanding of the principles of the disclosure. Many variations and modifications may be made to the above-described embodiment(s) of the disclosure without departing substantially from the spirit and principles of the disclosure. All such modifications and variations are intended to be included herein within the scope of this disclosure and the present disclosure and protected by the following claims.

## Claims

1. A system for managing virtual machines installed in physical machines using a control computer, the system comprising:
a command receiving module that receives a control command for adjusting an initial size of a first virtual machine installed in one of the physical machines;
a searching module that searches for a physical machine that has enough computing resources for creating a second virtual machine of a specified size;
a creating module that creates the second virtual machine of the specified size in a found physical machine;
a synchronizing module that copies computing resources of the first virtual machine to the second virtual machine at a first time;
the synchronizing module further controls the first virtual machine and the second virtual machine running in a parallel mode until all of the computing resources of the first virtual machine have been copied to the second virtual machine;
the synchronizing module further stops parallel running of the first virtual machine and the second virtual machine at a second time; and
a deleting module that deletes the first virtual machine, and releases the computing resource of the first virtual machine.

2. The system according to claim 1, wherein the computing resources comprise central processing units (CPUs), memory, and hard disks of the physical machines.

3. The system according to claim 1, wherein the specified size comprises a number of central processing unit (CPU), a size of memory, and a size of hard disk occupied by the second virtual machine.

4. The system according to claim 1, wherein the first time is determined to be a creation time of the second virtual machine, or determined to be a total time of the creation time and a preset delay time.

5. The system according to claim 1, wherein the second time is determined to be a finish time when all of the computing resources of the first virtual machine have been copied to the second virtual machine, or determined to be a total time of the finish time and a preset delay time.

6. A computer-implemented method for managing virtual machines installed in physical machines using a control computer comprising a processor, the method comprising execution of the steps comprising:
receiving a control command for adjusting an initial size of a first virtual machine installed in one of the physical machines;
searching for a physical machine that has enough computing resources for creating a second virtual machine of a specified size;
creating the second virtual machine of the specified size in a found physical machine;
copying computing resources of the first virtual machine to the second virtual machine at a first time;
controlling the first virtual machine and the second virtual machine running in a parallel mode until all of the computing resources of the first virtual machine have been copied to the second virtual machine;
stopping parallel running of the first virtual machine and the second virtual machine at a second time; and
deleting the first virtual machine, and releasing the computing resource of the first virtual machine.

7. The method according to claim 6, wherein the computing resources comprise central processing units (CPUs), memory, and hard disks of the physical machines.

8. The method according to claim 6, wherein the specified size comprises a number of central processing unit (CPU), a size of memory, and a size of hard disk occupied by the second virtual machine.

9. The method according to claim 6, wherein the first time is determined to be a creation time of the second virtual machine, or determined to be a total time of the creation time and a preset delay time.

10. The method according to claim 6, wherein the second time is determined to be a finish time when all of the computing resources of the first virtual machine have been copied to the second virtual machine, or determined to be a total time of the finish time and a preset delay time.
